(19) Europäisches Patentamt / European Patent Office / Office européen des brevets

(11) EP 1 370 620 B1

(12) # EUROPÄISCHE PATENTSCHRIFT

(45) Veröffentlichungstag und Bekanntmachung des Hinweises auf die Patenterteilung:
**15.10.2008 Patentblatt 2008/42**

(21) Anmeldenummer: **02735112.1**

(22) Anmeldetag: **01.03.2002**

(51) Int Cl.:
***C09D 11/02*** *(2006.01)* ***C09B 69/10*** *(2006.01)*

(86) Internationale Anmeldenummer:
**PCT/EP2002/002292**

(87) Internationale Veröffentlichungsnummer:
**WO 2002/072721 (19.09.2002 Gazette 2002/38)**

(54) **INKJET-TINTE**

INK FOR AN INK JET

ENCRE POUR JET D'ENCRE

(84) Benannte Vertragsstaaten:
**DE FR GB**

(30) Priorität: **12.03.2001 DE 10111655**

(43) Veröffentlichungstag der Anmeldung:
**17.12.2003 Patentblatt 2003/51**

(73) Patentinhaber: **Agfa Graphics N.V.**
**2640 Mortsel (BE)**

(72) Erfinder: **HELLING, Günter**
**51519 Odenthal (DE)**

(74) Vertreter: **Goedeweeck, Rudi et al**
**Agfa Graphics N.V.**
**IP Department 3622**
**Septestraat 27**
**2640 Mortsel (BE)**

(56) Entgegenhaltungen:
**EP-A- 0 465 124** **EP-A- 0 992 550**
**DE-A- 19 651 689**

- **PATENT ABSTRACTS OF JAPAN vol. 1998, no. 08, 30. Juni 1998 (1998-06-30) -& JP 10 060344 A (KONICA CORP), 3. März 1998 (1998-03-03)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 370 620 B1

Printed by Jouve, 75001 PARIS (FR)

## Beschreibung

Die Erfindung betrifft eine Tinte für die Erzeugung von Inkjet-Bildern, die in einem feinen bildmäßig modulierten Strahl auf ein geeignetes Aufzeichnungsmaterial gespritzt wird. Das Aufzeichnungsmaterial besteht aus einem transparenten, halbtransparenten oder undurchsichtigen Träger und einer darauf befindlichen Bildempfangsschicht.

Das Inkjet-Verfahren ist bekannt (siehe beispielsweise das Kapitel Ink Jet Printing von R. W. Kenyon in "Chemistry and Technology of Printing and Imaging Systems", Herausgeber Peter Gregory, Blackie Academic & Professional, Chapman & Hall 1996, Seiten 113 bis 138, und die darin zitierte Literatur).

Polymere Farbstoffe durch Umsetzung von Reaktivfarbstoffen mit Polyamidaminen sind aus EP 657 509 für die Verwendung in Tinten für Inkjet-Druckverfahren bekannt. Solche Tinten zeigen jedoch noch eine unbefriedigende Lagerstabilität.

Ein Problem bei Inkjet-Bildern ist die Stabilität und die Wischfestiglkeit.

Es ist aus EP 672 538 bekannt, zur Erzeugung von wasserfesten und wischfesten Inkjet Drucken reaktive Komponenten den Beschichtungsmassen der Unterlage zuzusetzen. Diese Zusätze bewirken bei einer nachträglichen Bestrahlung des Bildes eine Vernetzung der Beschichtungsmasse und damit eine Verbesserung der Wischfestigkeit des vorher in diese Bindemittel übertragenen Farbstoffs.

Nachteilig an diesem Verfahren ist, daß nach dem Druckvorgang ein weiterer teurer Verfahrensschritt wie Bestrahlung mit UV-Licht erforderlich ist. Weiterhin müssen weitere Zusätze, z.B. Fotoinitiatoren zugegeben werden, die bei Lagerung zur Vergilbung neigen und die Bildweißen unansehnlich erscheinen lassen. Weiterhin wird bei kurzen UV-Bestrahlungszeiten die gewünschte Verbesserung des Vcrwaschens der Drucke nicht erreicht.

Aus DE 19 651 689 ist bekannt, polymere Azomethinfarbstoffe oder Indoanilinfarbstoffe in gelöster oder dispergierter Form zu verwenden. Mit diesen Farbstoffen wird zwar eine ausreichende Farbstoffstabilität und Wischfestigkeit erreicht, aber die Lagerstabilität der dispergierten Farbstoffe in den Tinten ist noch nicht ausreichend. Insbesondere führen die Tinten nach dem Stand der Technik häufig zu einer Verstopfung der Druckkopfdüsen.

Aus EP 465 124 ist eine Tinte mit mizellaren Polymerteilchen bekannt, wobei Farbstoffe kovalent an der Hülle der Mizellen gebunden werden.

Der Erfindung liegt die Aufgabe zugrunde, eine lagerstabile Tinte für ein Inkjet-Druckverfahren bereitzustellen, die auf unterschiedlichen Unterlagen auch ohne spezielle Präparation ein Druckbild von hohem Glanz und guter Wisch- und Wasserfestigkeit ermöglicht und auch bei längerer Lagerung nicht zu Düsenverstopfung führt.

Es wurde nun gefunden, dass Tinten, die einen polymeren Azomethin-, Indoanilin- oder Azofarbstoff enthalten, der aus hydrophoben und hydrophilen Segmenten besteht, die genannten Anforderungen erfüllen.

Gegenstand der Erfindung ist daher eine Inkjet-Tinte, die einen an ein Polymergerüst gebundenen Farbstoff enthält, dadurch gekennzeichnet, dass es sich bei dem Farbstoff um einen Azomethin-, Indoanilin- oder Azofarbstoff und bei dem Polymer um ein Copolymer aus wenigstens einem hydrophoben Monomer und wenigstens einem hydrophilen, nicht-ionischen Monomer handelt und das Molekulargewicht des hydrophilen, nicht-ionischen Monomers wenigstens 200 beträgt.

Ein Monomer mit einem kovalent gebundenen Farbstoffrest wird im Folgenden auch als Farbstoffmonomer bezeichnet und ein Polymer, das kovalent gebundenen Farbstoff enthält, als Farbstoffpolymer oder polymerer Farbstoff.

Die Inkjet-Tinte enthält an polymerem Farbstoff insbesondere 1 bis 30 Gew.-%, vorzugsweise 2 bis 10 Gew.-%.

Für die erfindungsgemäßen Tinten geeignete polymere Azofarbstoffe sind z.B. in Polymer News, 1990, Vol. 15, S. 301-306 sowie den dort zitierten Literaturstellen beschrieben.

Polymere Azomethinfarbstoffe oder Indoanilinfarbstoffe sind aus fotografischen Materialien bekannt und werden z.B. durch Reaktion von polymeren Farbkupplern mit Farbentwicklern und Oxidationsmitteln erhalten. Polymere Farbkuppler sind in DE 1 297 417, 2 407 569, 3 148 125, 3 217 200, 3 320 079, 3 324 932, 3 331 743, 3 340 376, EP 27 284, US 4 080 211 und 5 234 807 beschrieben. Monomere Farbkuppler, die durch Copolymerisation zu polymeren Farbkupplern eingesetzt werden können, sind aus US 5 234 807 bekannt.

Geeignete Farbentwickler, üblicherweise p-Phenylendiaminverbindungen mit einer primären Aminogruppe sind z.B. aus T.H. James "The Theory of the Photographic Process", 4th Edition, Macmillan Publishing Co., Inc. New York, S. 291 ff und aus DE 195 03 885 bekannt.

Die polymeren Azomethinfarbstoffe oder Indoanilinfarbstoffe werden z.B. durch polymeranaloge Reaktion hergestellt, indem man einen polymeren Farbkuppler mit einem Entwickler unter Verwendung eines Oxidationsmittels zu einem polymeren Azomethinfarbstoff oder Indoanilinfarbstoff umsetzt.

Eine andere Möglichkeit besteht darin, zuerst einen niedermolekularen polymerisierbaren oder polykondensierbaren Farbstoff herzustellen und diesen Farbstoff in einer Folgereaktion zu einem hochmolekularen Farbstoff umzusetzen.

Die Azomethinfarbstoffe oder Indoanilinfarbstoffe enthalten vorzugsweise ein p-Phenylendiaminderivat als Kupplungskomponente. Besonders bevorzugt sind Verbindungen der Formel

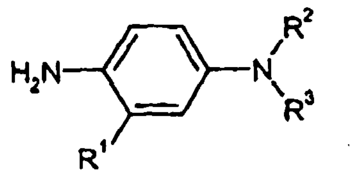

| $R^1$ | $R^2$ | $R^3$ |
|---|---|---|
| H | $C_2H_5$ | $C_2H_5$ |
| H | $C_2H_5$ | $C_2H_4OH$ |
| $CH_3$ | $C_2H_5$ | $C_2H_5$ |
| $CH_3$ | $C_2H_5$ | $C_2H_4NH\text{-}SO_2CH_3$ |
| $CH_3$ | $C_2H_5$ | $C_2H_4OH$ |
| $CH_3$ | $C_2H_5$ | $C_2H_4OCH_3$ |
| H | $C_4H_9$ | $C_4H_8\text{-}SO_3H$ |

Polymere Farbstoffe mit hydrophoben und hydrophilen Segmenten können durch Copolymerisation von monomeren Farbstoffen mit hydrophoben Comonomeren und hydrophilen Makromonomeren (MA) erhalten werden. Unter hydrophilen Makromonomeren sind hydrophile Oligo- oder Polymere zu verstehen, die mindestens eine polymerisierbare Gruppe enthalten.

Eine andere Möglichkeit zur Herstellung von polymeren Farbstoffen mit hydrophoben und hydrophilen Segmenten besteht in der polymeranalogen Reaktion. Dabei wird ein Polymer mit reaktiven Gruppen mit einem Farbstoff und mit hydrophoben und hydrophilen Verbindungen umgesetzt und anschließend in eine Dispersion überführt.

Bevorzugt ist es, wenn der Farbstoff an wenigstens ein hydrophobes Monomer kovalent gebunden ist. Die Verknüpfung der Farbstoffe mit der Polymerkette erfolgt vorzugsweise über eine -C(=O)-O-, -(C=O)-NH-, $-S(=O)_2-NH-$ oder Phenylengruppe.

Neben dem hydrophoben und dem hydrophilen Monomer wird bevorzugt noch ein weiteres Comonomer eingesetzt, wofür ethylenisch ungesättigte Verbindungen, insbesondere Acrylate, Methacrylate, gegebenenfalls substituierte Acrylamide, gegebenenfalls substituierte Methacrylamide, Maleinsäurederivate, gegebenenfalls substituierte Styrole, $\alpha$-Methylstyrol, Vinylether, Vinylsulfonsäure, (Meth-)acrylsäure, Vinylpyrrolidin oder Vinylpyridin besonders geeignet sind.

Der Anteil von Farbstoffmonomer am Farbstoffpolymer beträgt bevorzugt 10 bis 80 Gew.-%, besonders bevorzugt 20 bis 50 Ges.-% und der Anteil an hydrophilen Makromonomeren und/oder an hydrophilen Segmenten am Farbstoffpolymer beträgt bevorzugt 1 bis 60 Gew.-%, besonders bevorzugt 2 bis 30 Gew.-%.

In einer bevorzugten Ausführungsform handelt es sich bei dem hydrophilen, nicht-ionischen Monomer um ein Makromonomer (MA):

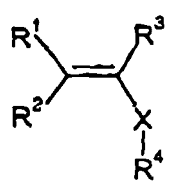

(MA),

wobei

$R^1$, $R^2$, $R^3$ Substituenten, insbesondere unabhängig voneinander H, Halogen, eine Alkylgruppe mit 1 bis 4 C-Atomen, $-C(=O)-O-R^5$ oder $-C(=O)-NH-R^5$,

X eine chemische Bindung oder eine verbindende Gruppe,

$R^4$ einen Oligomer- oder Polymerrest mit einem Molekulargewicht von 200 bis 20 000 und

$R^5$ H, Alkyl, Aryl oder Aralkyl

bedeuten und $R^4$-H bei 25°C eine Wasserlöslichkeit von wenigstens 10 g/l aufweist.

Besonders vorteilhaft ist es, wenn bei dem Makromonomer (MA)

$R^3$ -C(=O)-O-$R^5$, Cl oder F,

X eine chemische Bindung, -C(=O)-, -C(=O)-O-, C(=O)-NH-, -S(=O)$_2$-, -S(=O)$_2$-NH-, -NH-C(=O)-O-, -NH-C(=O)-NH-, -O-CO-NH-, Alyklen, Phenylen, Aralkylen, -Phenylen-C(=O)-O- oder -Phenylen-S(=O)$_2$-NH- und

$R^4$ einen Oligomer- oder Polymerrest mit einem Molekulargewicht von 250 bis 10 000

bedeuten und $R^4$-H bei 25 °C eine Wasserlöslichkeit von wenigstens 25 g/l aufweist.

In einer besonders vorteilhaften Ausführungsform enthält $R^4$ eines der Strukturelemente

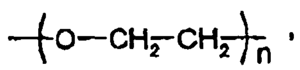

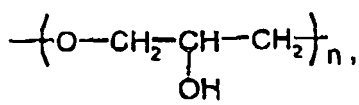

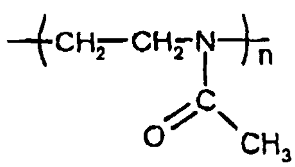

oder

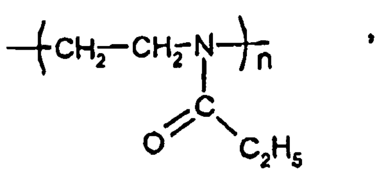

wobei n wenigstens 5, insbesondere wenigstens 10 beträgt.

Beispiele für hydrophile Makromonomere sind:

MA-1 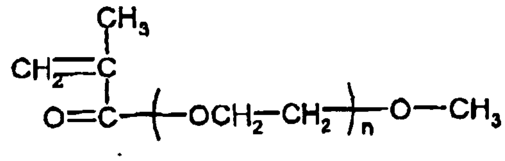 $M_n = 1000$

MA-2 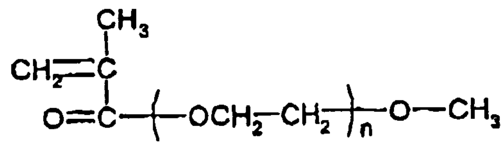 $M_n = 4000$

MA-3 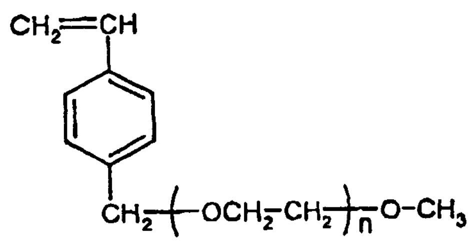 $M_n = 1000$

MA-4 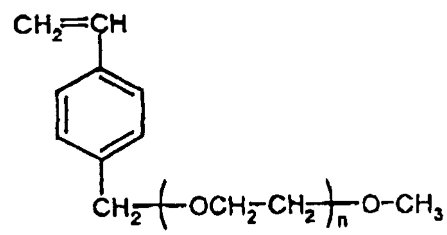 $M_n = 5000$

MA-5 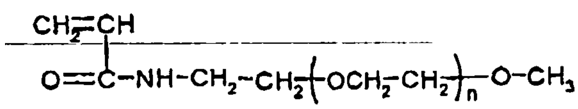 $M_n = 3000$

MA-6 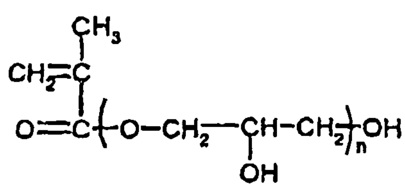 $M_n = 4000$

MA-7 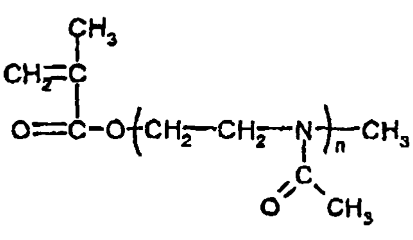 $M_n = 2000$

MA-8 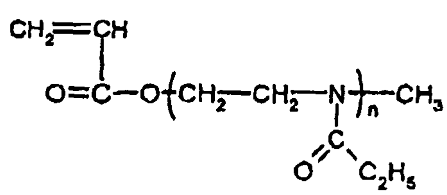 $M_n = 1000$

(fortgesetzt)

MA-9 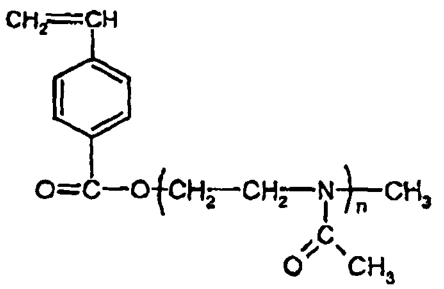 $M_n$ = 4000

MA-10 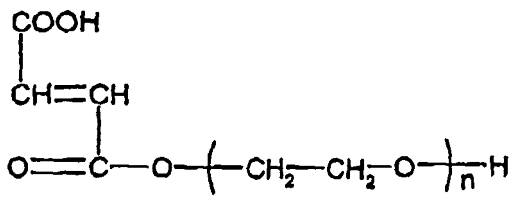 $M_n$ = 1200

Makromonomere sind bekannt aus Chen. et al. J. Polym. Sci. Part A 38, 1811-1817 (2000); Miyamoto et al., Macromolecules 22 (4), 1604-1607 (1989); Kobayashi et al., Polymer Bulletin 13, 447-451 (1985).

Beispiele für erfindungsgemäße Farbstoffpolymere mit hydrophoben und hydrophilen Segmenten sind im Folgenden aufgeführt.

Die Formeln geben an, wieviel Gewichtsprozent der einzelnen Monomere miteinander polymerisiert wurden.

Y-1

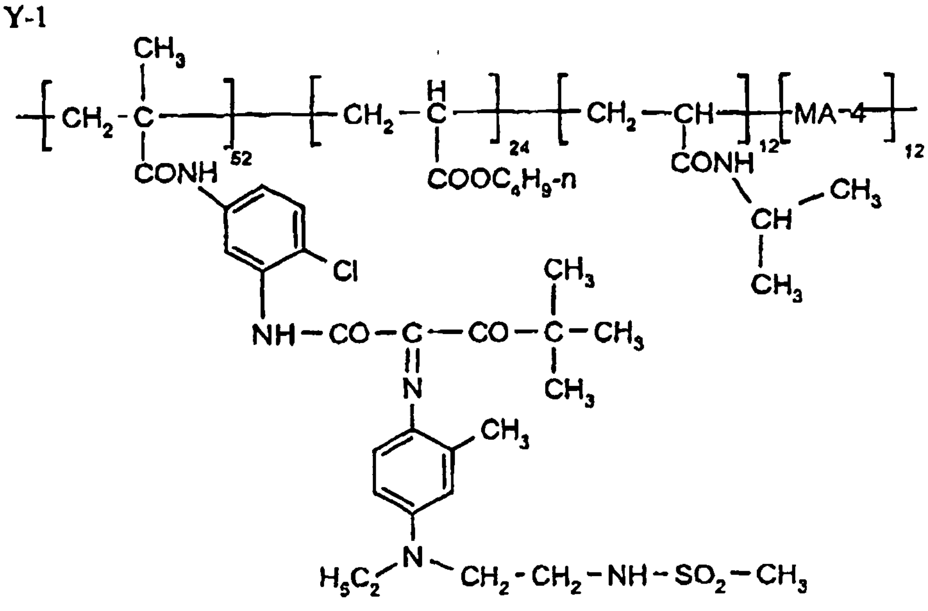

Y-2

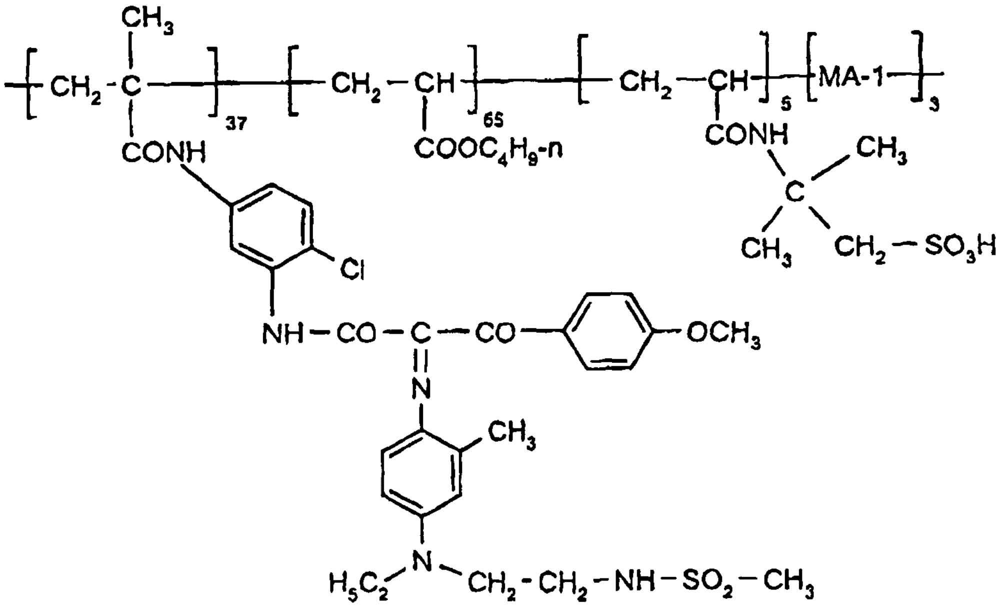

Y-3

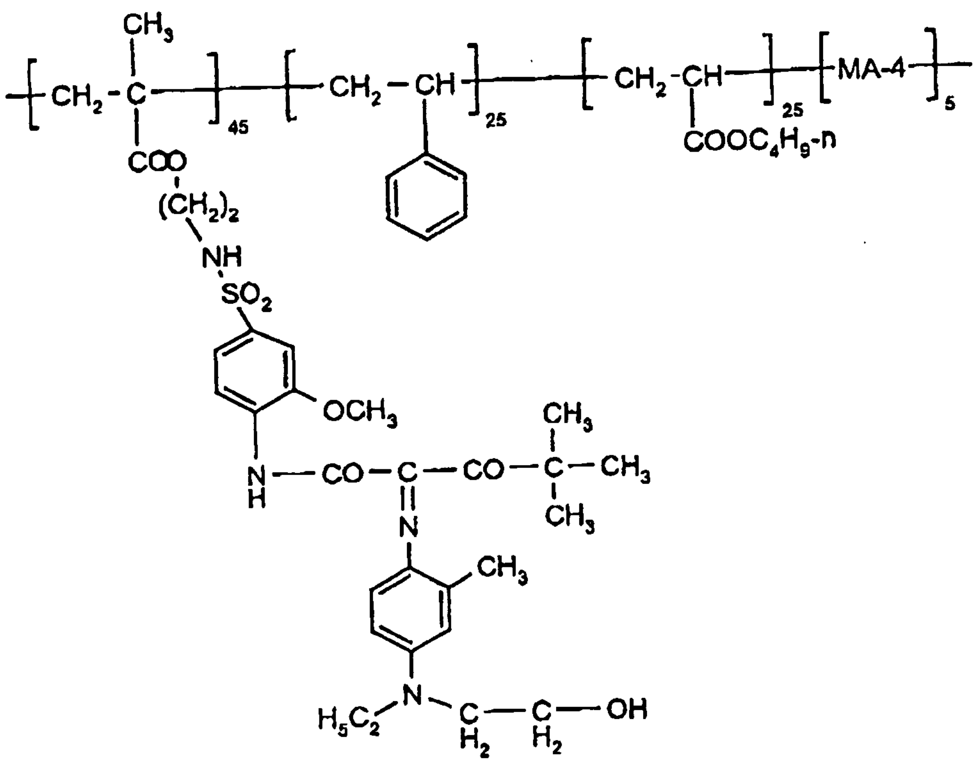

Y-4

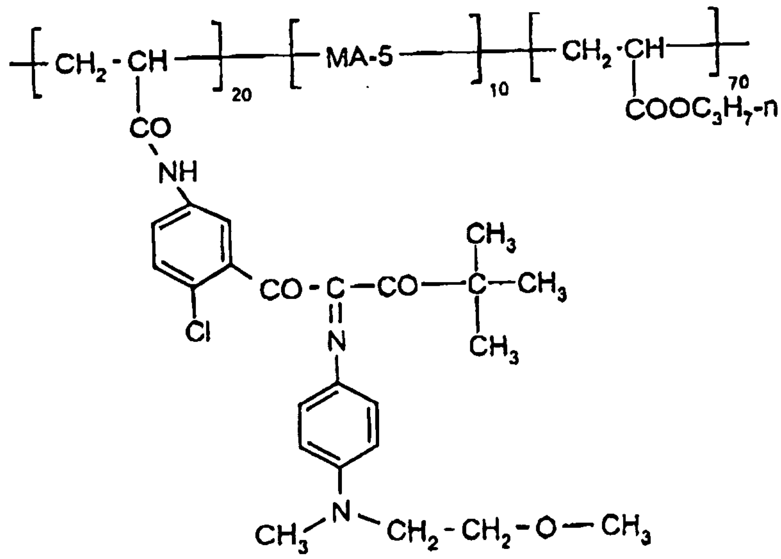

Y-5

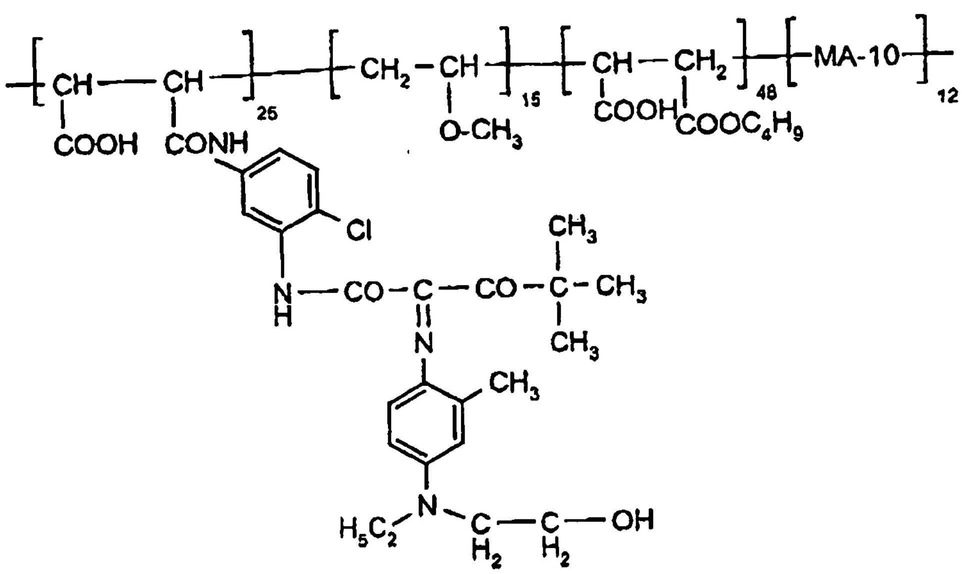

Y-6

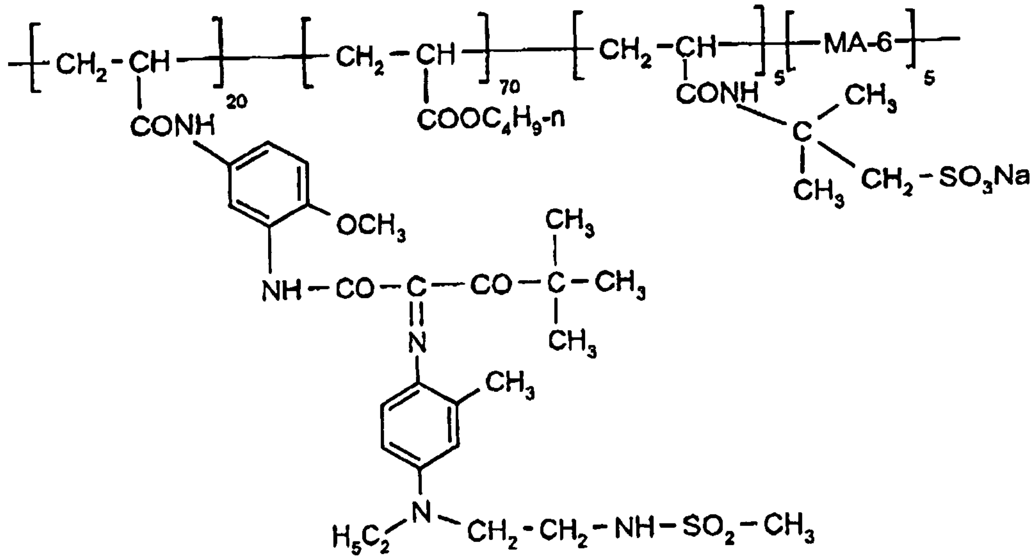

M-1

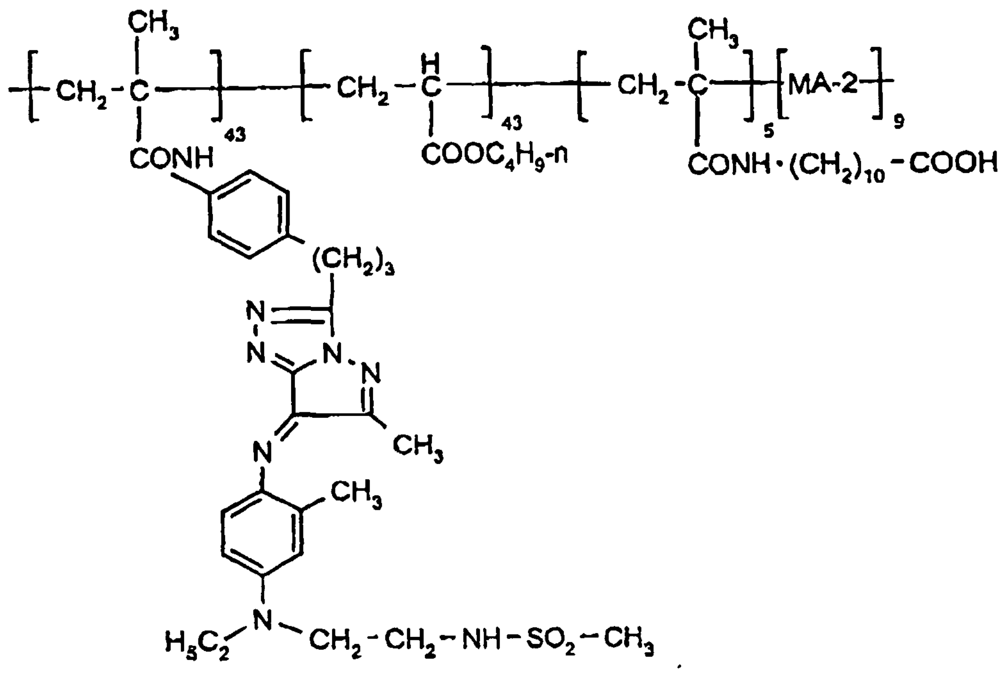

M-2

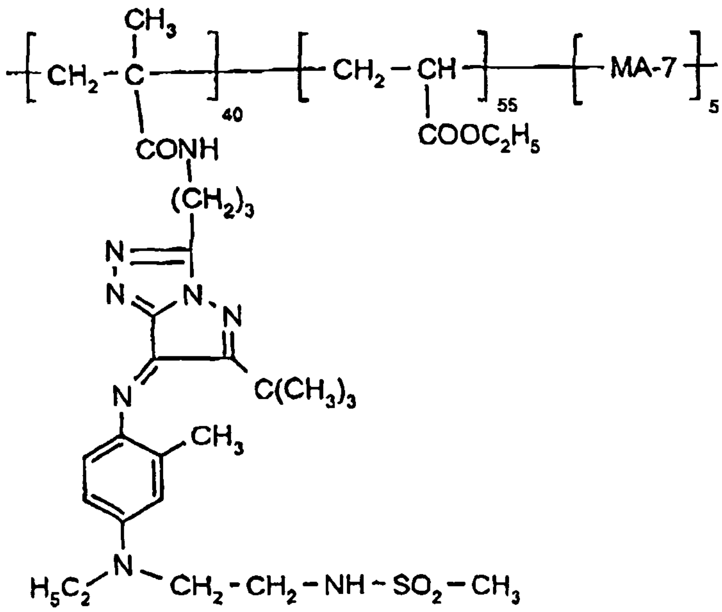

M-3

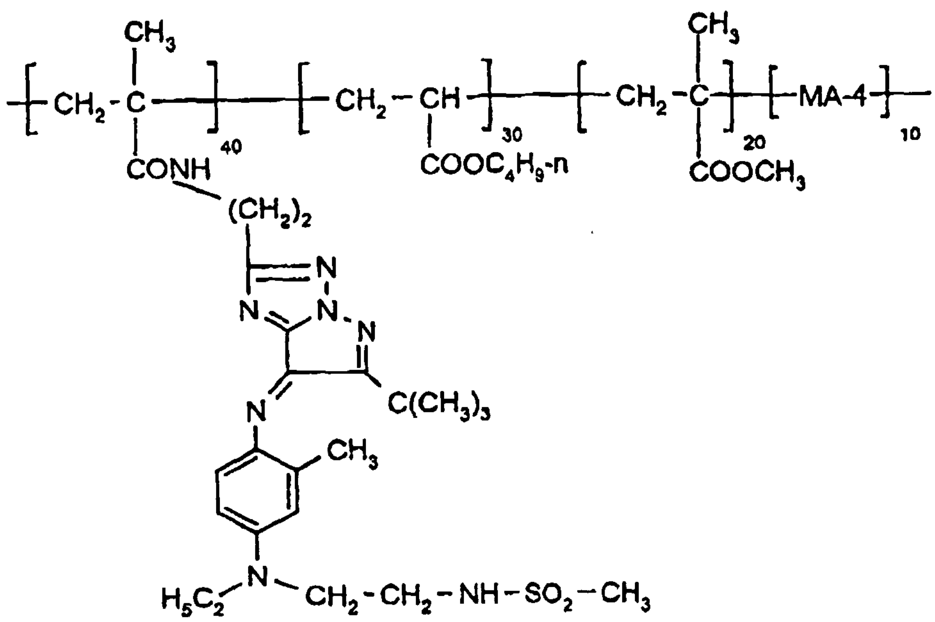

M-4

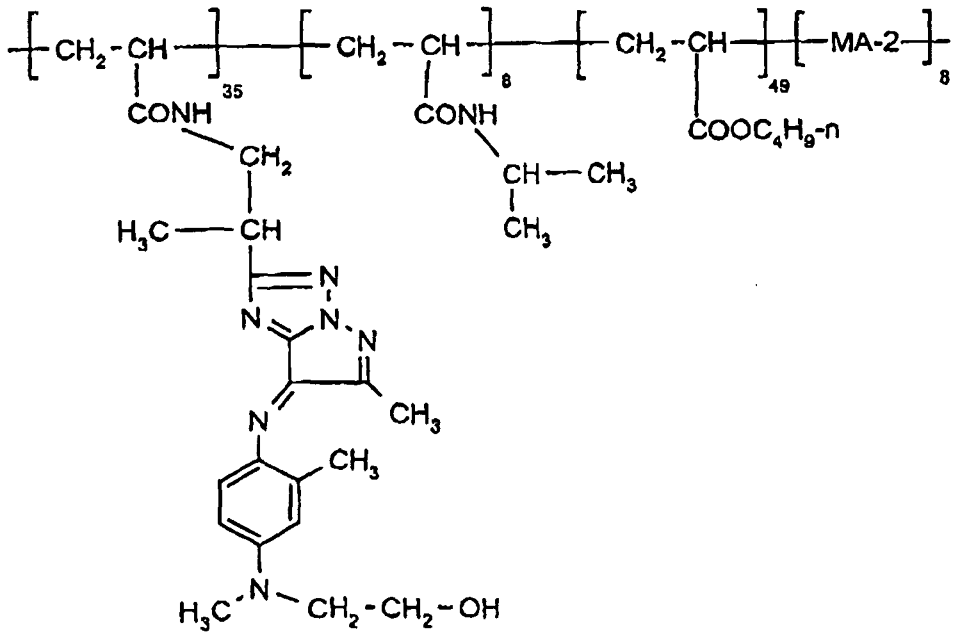

M-5

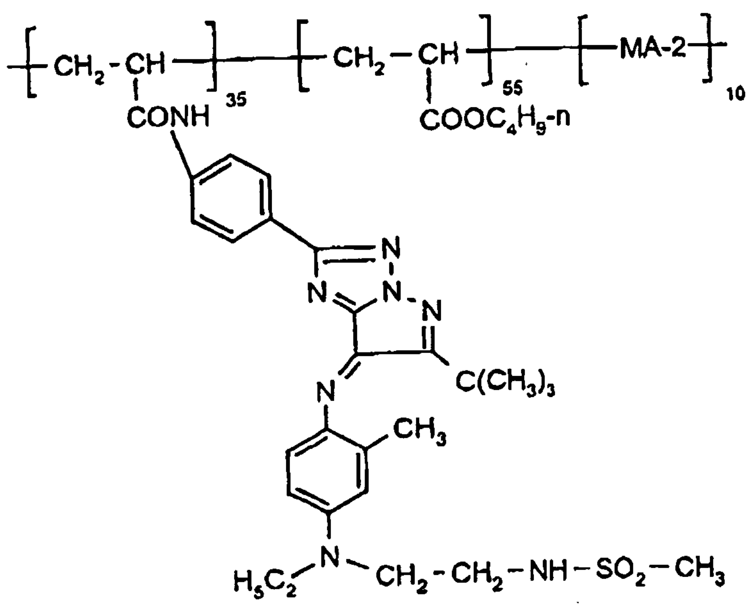

M-6

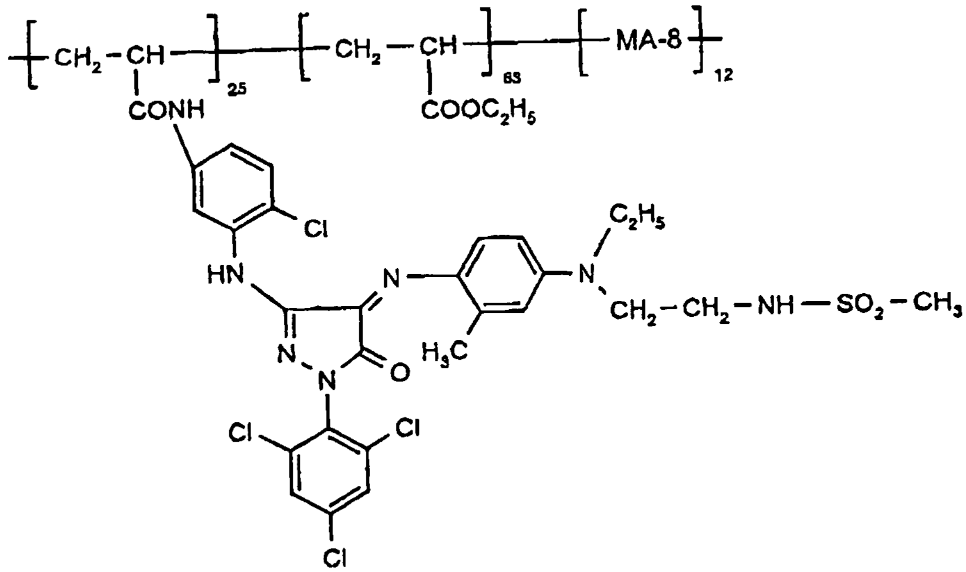

M-7

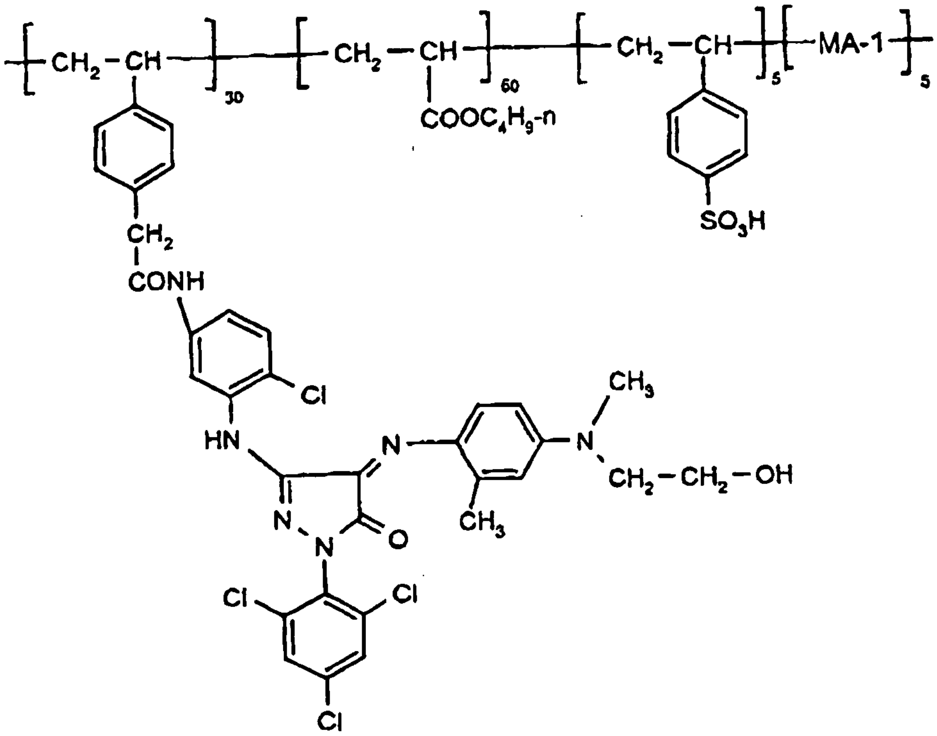

M-8

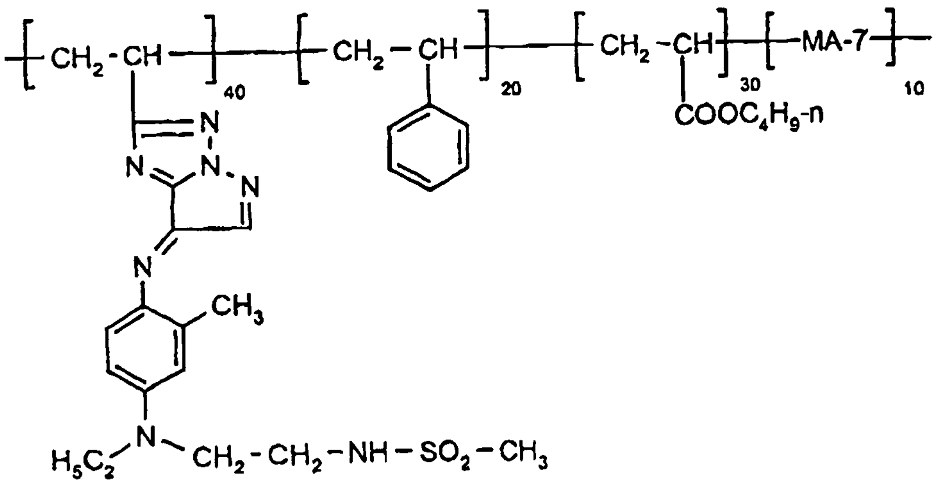

C-1

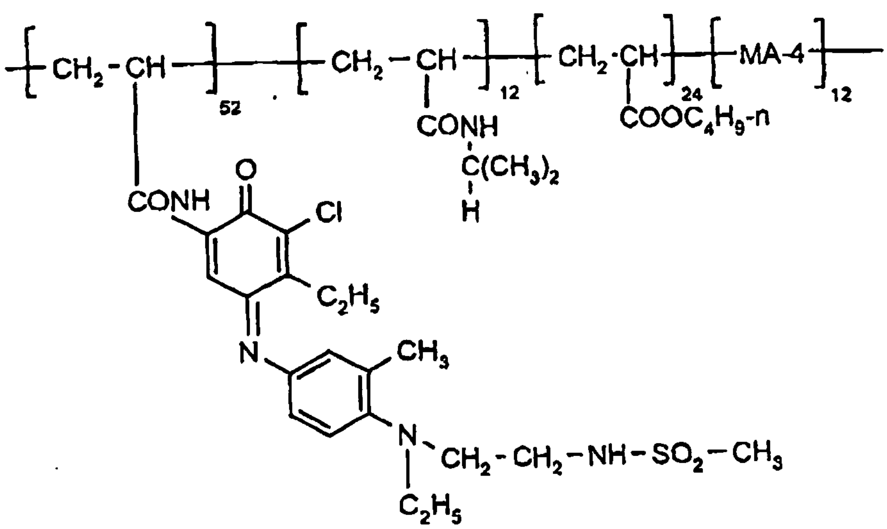

C-2

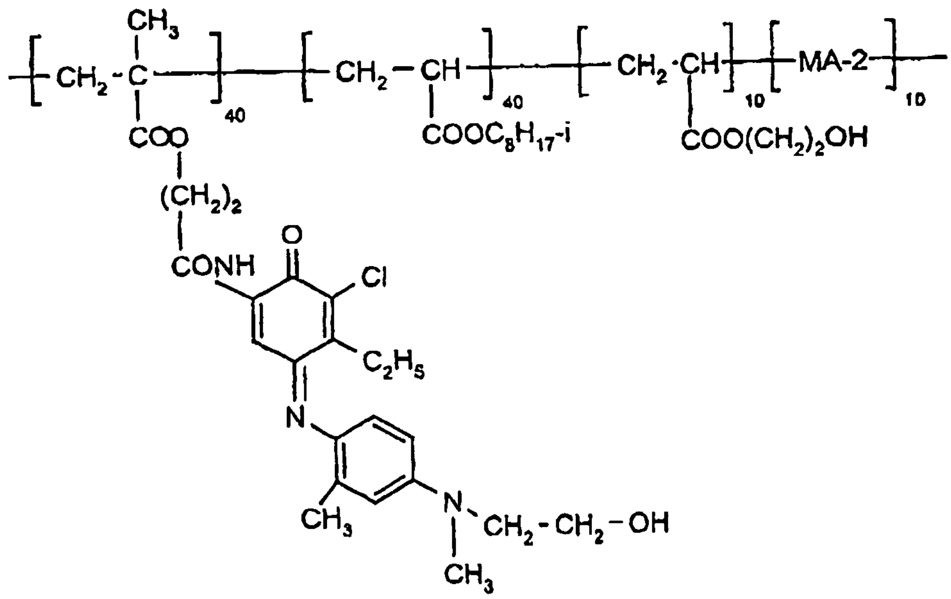

C-3

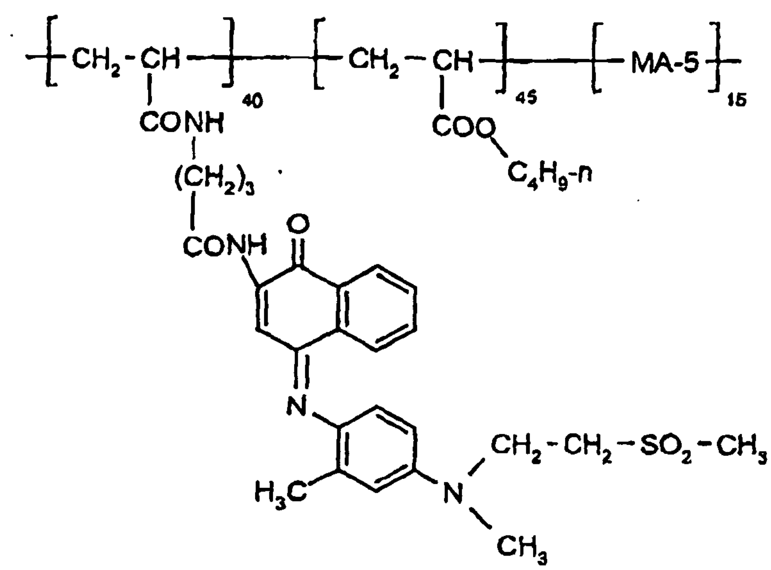

C-4

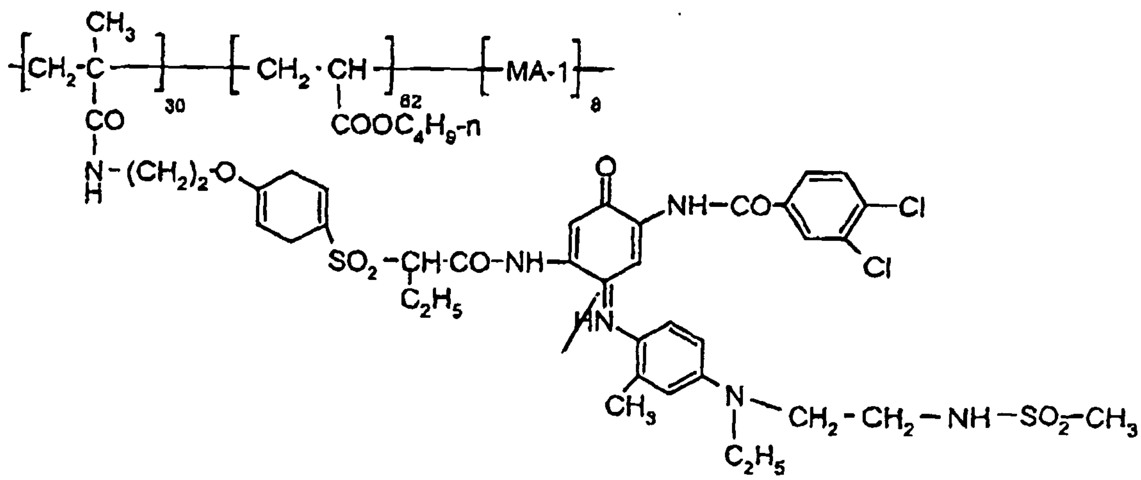

C-5

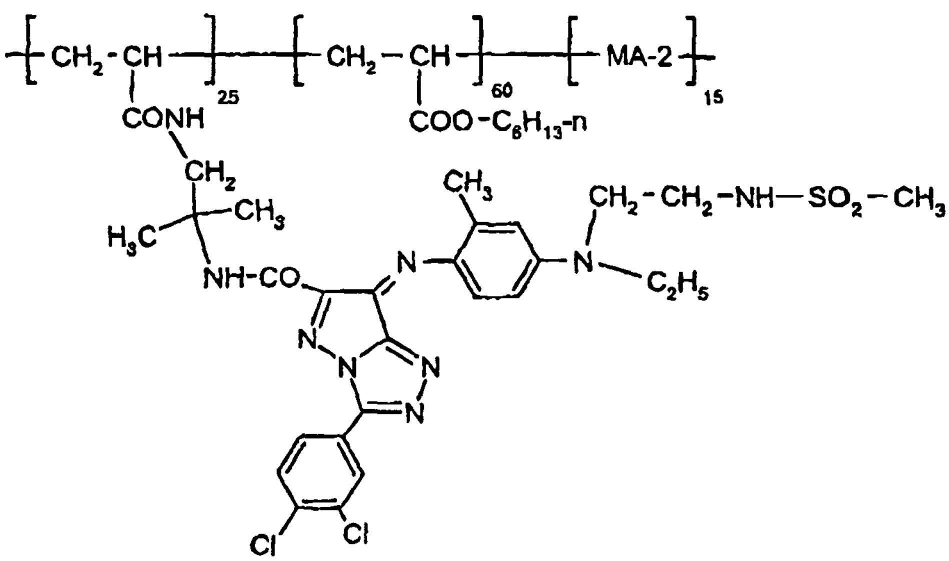

Die Tinte kann weitere Zusätze enthalten wie Biozide, Netzmittel bzw. oberflächenaktive Verbindungen, Abstandshalter, Mattierungsmittel, Stabilisatoren, UV-Absorber, Lösungsmittel, Weichmacher und Gleitmittel.

Geeignete Biozide, z.B. Isothiazolone und Benzisothiazolone, sind in Wallhäußer, "Praxis der Sterilisation, Desinfektion, Konservierung", Thieme Verlag Stuttgart, 1985, beschrieben.

Geeignete Netzmittel oder oberflächenaktive Verbindungen sind natürliche oberflächenaktive Verbindungen wie Saponin oder synthetische wie nicht-ionische Tenside, z.B. Alkylenoxidverbindungen, Glycerinverbindungen oder Glycidolverbindungen, kationische Tenside, z.B. höhere Alkylamine, quartäre Ammoniumsalze, Pyridinverbindungen und andere heterocyclische Verbindungen, Sultoniumverbindungen oder Phosphoniumverbindungen, anionische Tenside, enthaltend eine Säuregruppe, z.B. Carbonsäure-, Sulfonsäure-, eine Phosphorsäure-, Schwefelsäureester- oder Phosphorsäureestergruppe, ampholytische Tenside, z.B. Aminosäure- und Aminosulfonsäure-Verbindungen sowie Schwefel- oder Phosphorsäureester eines Aminoalkohols.

Weitere oberflächenaktive Verbindungen sind in RD 308 119 (1989) sowie in EP 314 425, 362 990, 549 496, US 4 839 262, 4 847 186, 4 916 054, 5 221 603, WO 90/12 782 und WO 92/15 554 beschrieben.

Geeignete Stabilisatoren sind o-, m- und p-Dihydroxybenzole, Hydroxychromane, 5-Hydroxycumarane, Spirochromane, Spiroindane, p-Alkoxyphenole, sterisch gehinderte Phenole, Gallussäurederivate, Methylendioxybenzole,

Aminophenole, Aminoaniline, sterisch gehinderte Amine, Derivate mit veresterten oder veretherten phenolischen Hydroxylgruppen bzw. Derivate mit acylierten oder alkylierten aromatischen Aminogruppen, Metallkomplexe. Detaillierte Beschreibungen sind enthalten in RD 307 105 (1989) Kap. VII, EP 246 766, 273 712, 304 067, 471 341, 524 540, 544 316, 544 317, 545 305, 585 679, 586 343, DE 42 09 346, 43 20 444, 43 23 477 sowie US 5 294 530, 5 278 039.

In vielen Fällen hat sich der Einsatz bestimmter Kombinationen von Farbbildstabilisatoren als besonders wirkungsvoll erwiesen. Solche Kombinationen sind z.B. in US 5 104 782 und 5 139 931, EP 298 321, 355 660, 457 543, 477 870, JP 0305 1846, sowie in DE 42 29 132,43 14 690 und 43 26 647 beschrieben.

Geeignete UV-Absorber sind in DE 195 03 885 beschrieben.

Weichmacher und Gleitmittel werden in RD 307 105 (1989) Kap. XII A und B beschrieben. Ferner werden core-shell-Latices mit einem weichen Kern und einer harten Hülle, sowie Latices die aus einem weichen Kern und einer Hülle aus vernetzter Gelatine bestehen (US 50 66 572), verwendet.

Lösungsmittel, die als Zusatz zu den Tinten verwendet werden können, sind z.B. Alkohole wie Ethanol, Glycol, Glycerin, Butandiol, Pentandiol, Hexantriol, Diethylenglykol, Polyethylenglykol, Isopropanol, Triethylenglykolmonobutylether, Thiodiethylenglykol, Thiodiglykol, Amide wie Pyrrolidon, Methylpyrrolidon, Dimethylacetamid. Harnstoffe wie Tetrabutylharnstoff.

Die polymeren Azomethinfarbstoffe können wasserlöslich oder wasserunlöslich sein. Die wasserlöslichen Farbstoffe werden direkt als wäßrige Tintenbestandteile eingesetzt. Die wasserunlöslichen polymeren Azomethinfarbstoffe werden in dispergierter oder emulgierter Form als Latex eingesetzt. Die wasserunlöslichen Farbstoffe können auch direkt als Dispersion erhalten werden, indem man polymere Latexfarbkuppler herstellt und die Latices durch Reaktion mit Entwicklern zu Latexfarbstoffen umsetzt.

Vorzugsweise werden gemäß der Erfindung dispergierte oder Latexfarbstoffe verwendet.

Die mittleren Teilchengrößen der dispergierten oder Latexfarbstoffe betragen 10-2 000 nm, vorzugsweise 30-300 nm.

Die dispergierten oder Latexteilchen können aus linearen oder vernetzten Makromolekülen aufgebaut sein.

In einer bevorzugten Ausführungsform enthält die Tinte außer dem polymeren Azomethinfarbstoff oder Azofarbstoff eine weitere Polymerdispersion oder einen Polymerlatex als Bindemittel.

Geeignete Polymerlatices sind z.B. Polyacrylate, Polymethacrylate, Polyalkylene wie Polyethylen, Polybutylen, Polyvinylidenchloride, Polyurethane, Polyester, Polyamide, Polyharnstoffe.

Vorzugsweise werden Polymerlatices mit einer Glasübergangstemperatur von kleiner als 50˚C eingesetzt. Die Polymerdispersionen weisen eine mittlere Teilchengröße von 10-3 000 nm, vorzugsweise von 20-400 nm auf.

Der Anteil an zugesetzten Polymerlatices beträgt vorzugsweise 10-500 Gew.-% bezogen auf den verwendeten polymeren Farbstoff.

Besonders gute Ergebnisse können mit wässrigen Inkjet-Tinten erzielt werden, insbesondere wenn das Farbstoffpolymer als Dispersion von Teilchen mit einem mittleren Durchmesser zwischen 30 und 300 nm vorliegt. Dabei ist es besonders vorteilhaft, wenn die Polymerteilchen strukturiert aufgebaut sind und einen hydrophoben, den Farbstoff enthaltenden inneren Bereich und eine hydrophile Hülle aufweisen.

Die Herstellung der erfindungsgemäßen Farbstoffpolymere erfolgt bevorzugt nach einem Verfahren, bei dem wenigstens ein Azomethin-, Indoanilin- oder Azofarbstoffmonomer und wenigstens ein Makromonomer (MA) in Lösung polymerisiert werden, wobei wenigstens ein organisches Lösungsmittel eingesetzt wird, anschließend dem Reaktionsgemisch wenigstens 25 Gew.-% an Wasser zugesetzt und dann wenigstens soviel des organischen Lösungsmittels abdestilliert wird, bis sich eine Polymer-Dispersion bildet, die aus Teilchen mit einem mittleren Durchmesser von maximal 300 nm, vorzugsweise 30 bis 300 nm und besonders bevorzugt 30 bis 100 nm besteht, wobei das organische Lösungsmittel und die Wassermenge so zu wählen sind, dass die Lösung direkt nach der Wasserzugabe noch homogen ist und anschließend bezogen auf das Gewicht mehr organisches Lösungsmittel als Wasser abdestilliert wird.

Weitere bevorzugte Ausführungsformen der Erfindung sind den Unteransprüchen zu entnehmen.

## Herstellung des erfindungsgemäßen Purpurfarbstoffes M-1

Unter Stickstoff wurden 0,7 g Oleylmethyltaurid in 136 ml Wasser gelöst und auf 80˚C erwärmt. Dann wurden zu dieser Lösung gleichzeitig 0,57 g einer Initiatorlösung aus 2 g Kaliumperoxidisulfat in 100 ml Wasser und eine Suspension aus 4,5 g Kuppler K-1, 7,5 g Butylacrylat, 1,9 g Methacrylamidoundecansäure und 1,1 g MA-2 in 68 ml Methanol zugegeben. Innerhalb 1 h wurden weitere 6,8 ml Initiatorlösung zugetropft und dann wurde 2 h bei 80˚C nachgerührt. Anschließend wurde das Methanol abdestilliert und der wäßrige Rückstand auf einen Feststoffgehalt von 10 Gew.-% eingestellt. Es wurde ein feinteiliger Latexkuppler erhalten.

Der Latexkuppler wurde mit 1,5 g Netzmittel N-1 versetzt. Danach wurden 3,5 g CD 3 und 4,6 g Kaliumperoxodisulfat zugegeben und nach Einstellen auf pH 10,5 30 min bei 40˚C gerührt. Der erhaltene pp-Farbstofflatex wird 36 h dialysiert und auf 10 Gew.-% aufkonzentriert. Der Latex weist eine mittlere Teilchengröße von 83 nm auf.

K-1

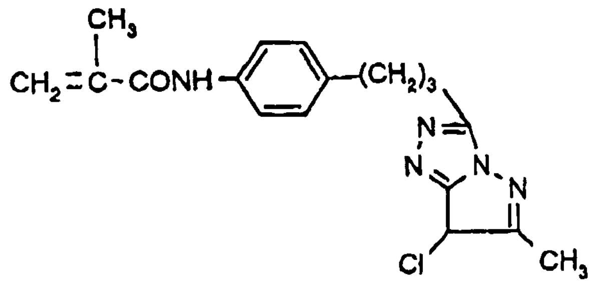

CD-3

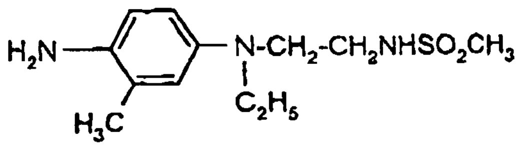

N-1

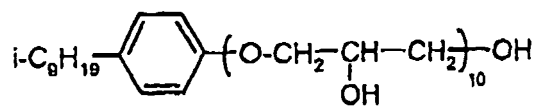

## Herstellung des erfindungsgemäßen Blaugrünfarbstoffs C-1

Unter Stickstoff werden 0,8 g Oleylmethyltaurid in 80 ml Wasser auf 95˚C erwärmt. Dann gibt man eine Lösung von 0,12 g Azobiscyanvaleriansäurenatriumsalz gelöst in 3 ml Wasser, 2,6 g Butylacrylat und 3,7 g einer Suspension von 8,4 g phenolischem Kupplermonomer 2-Chlor-3-ethyl-4-chlor-6-acrylamidophenol, 4,15 g i-Propylacrylamid, 4,15 g MA-4 und 0,4 g Oleylmethyltaurid in 20 g Wasser hinzu. Anschließend werden die restlichen Mengen der vorstehend genannten Suspension und 5,7 g Acrylsäurebutylester in einer Stunde zudosiert. Nach 2 Stunden Rühren bei 95˚C wird der nicht umgesetzte Acrylsäurebutylester durch Wasserdampfdestillation entfernt. Es wird ein feinteiliger Latex mit einem Feststoffgehalt von 18,3 Gew.-% erhalten.

Der Latexkuppler wurde mit 2,5 g Netzmittel N-1 versetzt. Danach wurden 9,9 g CD 3 und 20 g Kaliumperoxodisulfat zugegeben und nach Einstellen auf pH 10,8 30 min bei 45˚C gerührt. Der erhaltene bg-Farbstofflatex wird 36 h dialysiert und auf 15 Gew.-% aufkonzentriert. Der Latex weist eine mittlere Teilchengröße von 94 nm auf.

## Herstellung des erfindungsgemäßen Gelbfarbstoffs Y-1

Die Herstellung erfolgt analog der Vorschrift für C-1 mit dem Unterschied, dass anstelle des phenolischen Kupplermonomers das Monomer K-2 in äquivalenten Mengen verwendet wird.

K-2

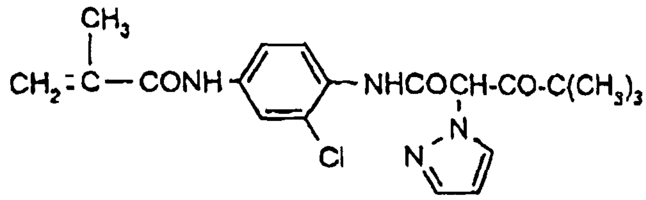

Es wird ein 19,5 gew.-%iger Latex mit einer mittleren Teilchengröße von 78 nm erhalten.

**Herstellung des erfindungsgemäßen Gelbfarbstoffs Y-2**

Es werden 3 Lösungen hergestellt: Lösung A aus 20 g 50 gew.-%igem Natriumacrylamido-2-methylpropansulfonat in Wasser, 110 g Butylacrylat, 74 g Farbstoff K-3 und 6 g Monomer MA-1 in 212 g n-Propanol und 18 g Wasser. Lösung B aus 2,1 g Azobisisobutyronitril, 127 g n-Propanol und 4 g Wasser. Lösung C aus 0,7 g Azobisisobutyronitril, 44 g n-Propanol und 2 g Wasser.

86 g der Lösung A und 25 g der Lösung B werden auf 90°C erwärmt. Dann wird bei Rückflusstemperatur die restliche Lösung A und B innerhalb von 2 Stunden zudosiert und weitere 4 h bei Rückflusstemperatur geführt. Anschließend wird die Lösung C zugegeben und weiter 4 Stunden bei Rückflusstemperatur gerührt. Danach werden 1250 g Wasser zudosiert und 800 ml Propanol und Wasser abdestilliert.

Man erhält eine feindisperse Farbstoffdispersion mit einer Teilchengröße von 43 nm, die mit Wasser auf 10 Gew.-% eingestellt wird.

K-3

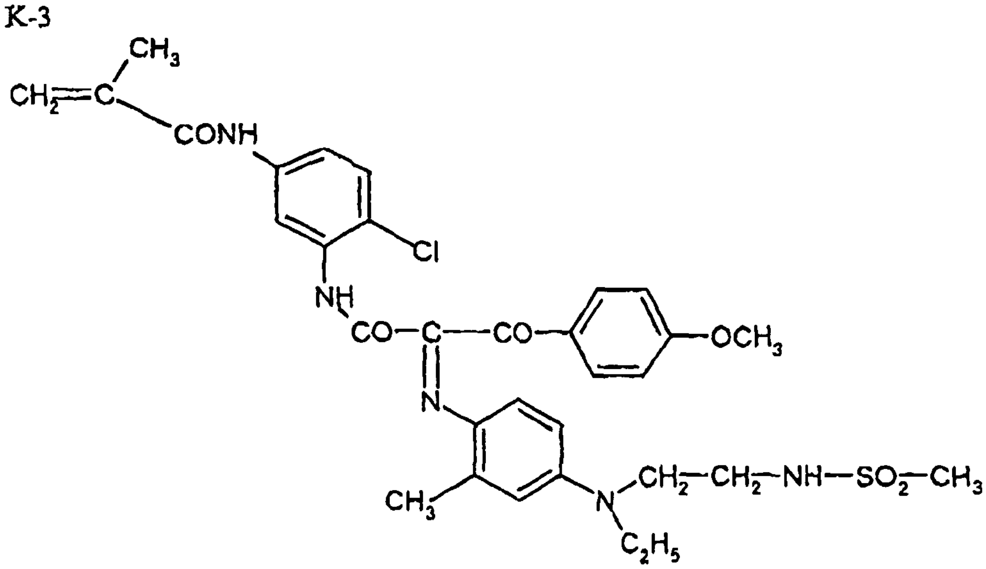

**Beispiel 1**

Eine Unterlage für Aufsichtsdrucke wird durch Beschichten von beidseitig mit Polyethylen beschichtetem Papier mit einem Gewicht von 90 g/m$^2$ mit einer 10 μm dicken Gelatineschicht hergestellt. Als Beschichtungsnetzmittel werden 0,1 Gew.-% (bezogen auf Gelatine) $C_8F_{17}SO_3^{\ominus}$ $(C_2H_5)_4$ $N^{\oplus}$ verwendet.

Tinte 1 wird durch Zusatz von 0.8 g Diethylenglykol zu 10 ml der 10 gew.-%igen Dispersion von M-1 hergestellt.

Tinte 2 wird durch Zusatz von 0,5 g Pyrrolidon und 0,5 g Diethylenglykol zu 10 ml der mit destilliertem Wasser auf 10 Gew.-% verdünnten Dispersion von C-1 hergestellt.

Tinte 3 wird durch Zusatz von 1,0 g Diethylenglykol zu 10 ml der 10 gew.-%igen Dispersion von Y-2 hergestellt.

Tinten 4-8 werden durch Zusatz von weiteren Polymeren zu den Tinten 1 bis 3 hergestellt (s. Tabelle 1).

**Tabelle 1**

| Tinte | Ausgangstinte / Menge | Zusatz / Menge |
|---|---|---|
| 4 | 1/10 g | Polymer 1/6g |
| 5 | 1/10g | Polymer 2/4g |
| 6 | 2/10 g | Polymer 1/7 g |
| 7 | 2/10g | Polymer 2/10 g |
| 8 | 3/10g | Polymer 3/8 g |

Polymer 1

10 gew.-%iger Latex aus Polyethylacrylat mit einer Teilchengröße von 60 nm

Polymer 2

10 gew.-%iger Polyesterpolyurethanlatex aus einem Adipinsäure/Butandiol-Polyesterdiol, Hexamethylendiisocyanat und N-Sulfoethylethylendiamin mit einer Teilchengröße von 50 nm.

Polymer 3

10 gew.-%iger Latex aus Polymethylmethacrylat-co-butylacrylat-co-2-acrylamido-2-methyl-propansulfonsäure 30/65/6 Gew.-% mit einer mittleren Teilchengöße von 85 nm.

**Anwendungsbeispiel 1**

Die in Beispiel 1 beschriebene Unterlage wird mit einem Drucker HP DJ 850 mit blaugrünen, gelben und purpurnen Streifen mit einer Breite von 1 cm bedruckt und die erzielten Farbschichten $D_1$ mit einem Macbeth Densitometer gemessen. Anschließend wird die bedruckte Unterlage mit einem Quetschwalzenpaar gegen ein handelsübliches Kopierpapier Agfa 2001 gepresst. Dabei wird ein Teil der Farbstoffe auf das Kopierpapier übertragen. Nach diesem Vorgang werden wieder die Dichten $D_2$ auf der Papierunterlage gemessen. Die relative Dichteabnahme $\Delta D_{rel}$ ist ein Maß für die Festigkeit der Farbstoffe auf der Unterlage

$$\Delta D_{rel} = \frac{D_1 - D_2}{D_1} \cdot 100$$

Die gemessenen Werte sind in Tabelle 2 aufgelistet und zeigen, dass die erfindungsgemäßen Tinten eine deutlich bessere Abklatschfertigkeil als übliche Tinten aufweisen,

Es wurden folgende handelsübliche Tintenfarbstoffe verwendet:

| | | |
|---|---|---|
| gelb: | Colour Index AY 23 | (a) |
| purpur: | Colour Index AR 52, RR 180 | (b) |
| Blaugrün: | AB 9, DB 199 | (c) |

Tabelle 2

| Tinte | Farbe | $D_1$ | $D_2$ | $\Delta D_{rel}$ | |
|---|---|---|---|---|---|
| A | gb | 1,40 | 1,27 | 9,3 | Vergleich |
| b | pp | 1,95 | 1,70 | 12,8 | Vergleich |
| c | bg | 2,75 | 2,51 | 8,7 | Vergleich |

(fortgesetzt)

| Tinte | Farbe | $D_1$ | $D_2$ | $\Delta D_{rel}$ | |
|---|---|---|---|---|---|
| Tinte 1 | pp | 1,85 | 1,82 | 1,6 | Erfindung |
| Tinte 2 | bg | 2,43 | 2,41 | 0,8 | Erfindung |
| Tinte 3 | gb | 2,28 | 2,25 | 1,3 | Erfindung |
| Tinte 4 | pp | 2,04 | 2,04 | 0 | Erfindung |
| Tinte 5 | pp | 2,13 | 2,09 | 1,9 | Erfindung |
| Tinte 6 | bg | 2,50 | 2,48 | 0,8 | Erfindung |
| Tinte 7 | bg | 2,24 | 2,21 | 1,3 | Erfindung |
| Tinte 8 | gb | 1,94 | 1,93 | 0,5 | Erfindung |
| gb: Gelb; pp: Purpur; bg: Blaugrün | | | | | |

**Anwendungsbeispiel 2**

Die in Anwendungsbeispiel 1 beschriebenen mit Tinte bedruckten Streifen werden 30 Sekunden bei Raumtemperatur gewässert. Dabei bilden die Vergleichsproben bei allen Farben deutlich störende Farbsäume von 1 mm Breite aus. Bei den erfindungsgemäßen Proben bleiben die untersuchten Proben unverändert.

**Anwendungsbeispiel 3**

100 ml der erfindungsgemäßen Tinten 1 bis 3 und die Vergleichstinten werden durch einen Filter mit 0,8 µm Porenweite filtriert und bei Raumtemperatur 60 Tage gelagert. Anschließend wird durch einen Filter mit 1,2 µm Porenweite filtriert und der Filtrationsrückstand bestimmt.

| | Filtrationsrückstand |
|---|---|
| Tinte 1 | kein Rückstand |
| Tinte 2 | kein Rückstand |
| Tinte 3 | kein Rückstand |
| V-1 | 0,3 mg Rückstand |
| V-2 | 1,7 mg Rückstand |
| V-3 | 98 mg Rückstand |

Aus den gemessenen Daten ist ersichtlich, dass die erfindungsgemäßen Tinten lagerstabil sind, während die Vergleichstinten bei Lagerung zu Agglomerationen führen und in der praktischen Anwendung Düsenverstopfungen verursachen.

Die Herstellung der Vergleichstinten erfolgte wie in DE 19 651689 beschrieben:

V-1 = Tinte 1 der DE 19 651 689
V-2 = Tinte 2 der DE 19 651 689
V-3 = Tinte 3 der DE 19 651 689

**Patentansprüche**

1. Inkjet-Tinte, die einen an ein Polyinergerüst gebundenen Farbstoff enthält, **dadurch gekennzeichnet, dass** es sich bei dem Farbstoff um einen Azomethin-, Indoanilin- oder Azofarbstoff und bei dem Polymer um ein Copolymer aus wenigstens einem hydrophoben Monomer und wenigstens einem hydrophilen, nicht-ionischen Monomer handelt, das Molekulargewicht des hydrophilen, nicht-ionischen Monomers wenigstens 200 beträgt und der Farbstoff an wenigstens ein hydrophobes Monomer gebunden ist.

**2.** Inkjet-Tinte nach Anspruch 1, **dadurch gekennzeichnet, dass** das Polymer aus wenigstens einem weiteren Monomer aufgebaut ist.

**3.** Inkjet-Tinte nach Anspruch 1, **dadurch gekennzeichnet, dass** es sich bei wenigstens einem nicht-ionischen Monomer um ein Makromonomer (MA) handelt:

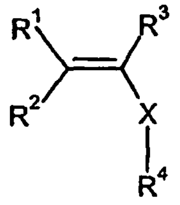

(MA),

wobei

$R^1$, $R^2$, $R^3$ Substituenten, insbesondere unabhängig voneinander H, Halogen, eine Alkylgruppe mit 1 bis 4 C-Atomen, -C(=O)-O-$R^5$ oder -C(=O)-NH-$R^5$
X eine chemische Bindung oder eine verbindende Gruppe,
$R^4$ einen Oligomer- oder Polymerrest mit einem Molekulargewicht von 200 bis 20000 und
$R^5$ H, Alkyl, Aryl oder Aralkyl

bedeuten und $R^4$-H bei 25 °C eine Wasserlöslichkeit von wenigstens 10 g/l aufweist.

**4.** Inkjet-Tinte nach Anspruch 3, **dadurch gekennzeichnet, dass**

$R^3$ -C(=O)-O-$R^5$, Cl oder F,
X eine chemische Bindung, -C(=O)-, -C(=O)-O-, -C(=O)-NH-, -S(=O)$_2$-, -S(=O)$_2$-NH-, -NH-C(=O)-O-, -NH-C(=O)-NH-, -O-CO-NH-, Alkylen, Phenylen, Aralkylen, -Phenylen-C(=O)-O- oder -Phenylen-S(=O)$_2$-NH- und
$R^4$ einen Oligomer- oder Polymerrest mit einem Molekulargewicht von 250 bis 10000

bedeuten und $R^4$-H bei 25°C eine Wasserlöslichkeit von wenigstens 25 g/l aufweist.

**5.** Inkjet-Tinte nach Anspruch 1, **dadurch gekennzeichnet, dass** die Tinte Wasser enthält und das Farbstoffpolymer als Dispersion von Teilchen mit einem mittleren Durchmesser von maximal 300 nm vorliegt.

**6.** Inkjet-Tinte nach Anspruch 5, **dadurch gekennzeichnet, dass** die Polymerteilchen strukturiert aufgebaut sind und einen hydrophoben, den Farbstoff enthaltenden inneren Bereich und eine hydrophile Hülle aufweisen.

**7.** Verfahren zur Herstellung einer Polymerdispersion zur Verwendung in einer Inkjet-Tinte nach einem der Ansprüche 5 oder 6, **dadurch gekennzeichnet, dass** wenigstens ein Azomethin-, Indoanilin- oder Azofarbstoffmonomer und wenigstens ein Makromonomer (MA) nach Anspruch 3 in Lösung polymerisiert werden, wobei wenigstens ein organisches Lösungsmittel eingesetzt wird, anschließend dem Reaktionsgemisch wenigstens 25 Gew.-% an Wasser zugesetzt und dann wenigstens soviel des organischen Lösungsmittels abdestilliert wird, bis sich eine Polymer-Dispersion bildet, die aus Teilchen mit einem Durchmesser von maximal 300 nm besteht, wobei das organische Lösungsmittel und die Wassermenge so zu wählen sind, dass die Lösung direkt nach der Wasserzugabe noch homogen ist und anschließend bezogen auf das Gewicht mehr organisches Lösungsmittel als Wasser abdestilliert wird.

## Claims

**1.** Ink jet ink containing a dye linked to a polymer skeleton, wherein the dye is an azomethine dye, an indoaniline dye or an azo dye and the polymer is a copolymer consisting of at least one hydrophobic monomer and at least one hydrophilic, non-ionic monomer, the molecular weight of the hydrophilic, non-ionic monomer being at least 200 and the dye being linked to at least one hydrophobic monomer.

**2.** Ink jet ink according to claim 1, wherein the polymer comprises at least one other monomer.

**3.** Ink jet ink according to claim 1, wherein at least one non ionic monomer is a macromonomer (MA) represented by the following formula :

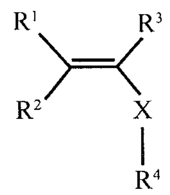

(MA)

wherein

$R^1$, $R^2$, $R^3$ represent substituents, in particular each independently hydrogen, halogen, a C1-C4 alkyl group, -C(=O)-O-$R^5$ or -C(=O)-NH-$R^5$,
X represents a chemical bond or a linking group,
$R^4$ represents an oligomer or polymer radical having a molecular weight ranging from 200 to 20000 and
$R^5$ represents hydrogen, alkyl, aryl or aralkyl and

$R^4$-H exhibits a water solubility of at least 10 g/l at a temperature of 25°C.

**4.** Ink jet ink according to claim 3, wherein:

$R^3$ represents -C(=O)-O-$R^5$, Cl or F,
X represents a chemical bond, -C(=O)-, -C(=O)-O-, -C(=O)-NH-, -$S(=O)_2$-, -$S(=O)_2$-NH-, -NH-C(=O)-O-, -NH-C(=O)-NH-, -O-CO-NH-, alkylene, phenylene, aralkylene, -phenylene-C(=O)-O- or -phenylene-$S(=O)_2$-NH- and
$R^4$ represents an oligomer or polymer radical having a molecular weight ranging from 250 to 10000 and
$R^4$-H exhibits a water solubility of at least 25 g/l at a temperature of 25°C.

**5.** Ink jet ink according to claim 1, wherein the ink contains water and the dye polymer is used in the form of a dispersion of particles having an average particle diameter of not more than 300 nm.

**6.** Ink jet ink according to claim 5, wherein the polymer particles are structured and are composed of a hydrophobic inner region containing the dye and a hydrophilic shell.

**7.** A method for preparing a polymer dispersion for use in an ink jet ink according to any of claims 5 or 6, wherein the said method comprises the steps of polymerizing at least one azomethine dye monomer, indoaniline dye monomer or azo dye monomer and at least one macromonomer (MA) according to claim 3 in solution in the presence of at least one organic solvent, then adding at least 25% by weight of water to the reaction mixture and then distilling off at least an equivalent amount of the organic solvent until a polymer dispersion composed of particles having a diameter of not more than 300 nm is formed, whereby the organic solvent and the amount of water must be chosen so that the solution is still homogeneous directly after the addition of the water and subsequently a higher amount by weight of organic solvent than water is distilled off.

## Revendications

**1.** Une encre pour jet d'encre contenant un colorant lié à une squelette polymère, 1 **caractérisée en ce que** le colorant est un colorant à l'azométhine, un colorant à l'indoaniline ou un colorant azoïque et que le polymère est un copolymère composé d'au moins un monomère hydrophobe et d'au moins un monomère hydrophile non ionique, le poids moléculaire du monomère hydrophile non ionique s'élevant à au moins 200 et le colorant étant lié à au moins un monomère hydrophobe.

**2.** Encre pour jet d'encre selon la revendication 1, **caractérisée en ce que** le polymère comprend au moins un autre monomère.

**3.** Encre pour jet d'encre selon la revendication 1, **caractérisée en ce qu'**au moins un monomère non ionique est un macromonomère (MA) répondant à la formule suivante :

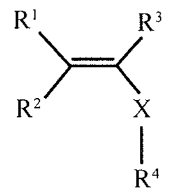

(MA)

où :

$R^1$, $R^2$ et $R^3$ représentent des substituants, en particulier, indépendamment l'un de l'autre, un atome d'hydrogène, un atome d'halogène, un groupe alkyle comprenant 1 à 4 atomes de carbone, -C(=O)-O-$R^5$ ou -C(=O)-NH-$R^5$,
X représente une liaison chimique ou un groupe de liaison,
$R^4$ représente un radical oligomère ou radical polymère ayant un poids moléculaire compris entre 200 et 20.000 et
$R^5$ représente un atome d'hydrogène, un groupe alkyle, un groupe aryle ou un groupe aralkyle,

et $R^4$-H présente une solubilité dans l'eau à 25°C d'au moins 10 g/l.

**4.** Encre pour jet d'encre selon la revendication 3, **caractérisée en ce que**:

$R^3$ représente -C(=O)-O-$R^5$, Cl ou F,
X représente une liaison chimique -C(=O)-, -C(=O)-O-, -C(=O)-NH-, -S(=O)$_2$-, -S(=O)$_2$-NH-, -NH-C(=O)-O-, -NH-C(=O)-NH-, -O-CO-NH-, un groupe alkylène, un groupe phénylène, un groupe aralkylène, un groupe -phénylène-C(=O)-O- ou un groupe -phénylène-S(=O)$_2$-NH- et
$R^4$ représente un radical oligomère ou radical polymère ayant un poids moléculaire compris entre 250 et 10.000,

et $R^4$-H présente une solubilité dans l'eau à 25°C d'au moins 25 g/l.

**5.** Encre pour jet d'encre selon la revendication 1, **caractérisée en ce que** l'encre contient de l'eau et que le polymère contenant un colorant est utilisé sous forme de dispersion de particules présentant une grandeur de particule moyenne maximale de 300 nm.

**6.** Encre pour jet d'encre selon la revendication 5, **caractérisée en ce que** les particules du polymère sont structurées et sont constituées d'un noyau hydrophobe contenant le colorant et d'une coquille hydrophile.

**7.** Un procédé pour la production d'une dispersion de polymère pour utilisation dans une encre pour jet d'encre selon l'une quelconque des revendications 5 ou 6, **caractérisé en ce qu'**au moins un monomère comprenant un colorant à l'azométhine, un colorant à l'indoaniline ou un colorant azoïque et au moins un macromonomère (MA) selon la revendication 3 sont polymérisés en solution en utilisant au moins un solvant organique, que le mélange réactionnel est ensuite additionné d'au moins 25% en poids d'eau et qu'au moins une quantité équivalente de solvant organique est ensuite éliminée par distillation jusqu'à formation d'une dispersion de polymère composée de particules ayant un diamètre maximal de 300 nm, le solvant organique et la quantité d'eau étant à choisir de façon à ce que l'addition de l'eau ne modifie pas instantanément l'homogénéité de la solution et qu'il est ensuite éliminé une quantité en poids de solvant organique qui est supérieure à la quantité en poids d'eau.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 657509 A
- EP 672538 A
- DE 19651689
- EP 465124 A
- DE 1297417
- DE 2407569
- DE 3148125
- DE 3217200
- DE 3320079
- DE 3324932
- DE 3331743
- DE 3340376
- EP 27284 A
- US 4080211 A
- US 5234807 A
- DE 19503885
- EP 314425 A
- EP 362990 A
- EP 549496 A
- US 4839262 A
- US 4847186 A
- US 4916054 A
- US 5221603 A
- WO 9012782 A
- WO 9215554 A
- EP 246766 A
- EP 273712 A
- EP 304067 A
- EP 471341 A
- EP 524540 A
- EP 544316 A
- EP 544317 A
- EP 545305 A
- EP 585679 A
- EP 586343 A
- DE 4209346
- DE 4320444
- DE 4323477
- US 5294530 A
- US 5278039 A
- US 5104782 A
- US 5139931 A
- EP 298321 A
- EP 355660 A
- EP 457543 A
- EP 477870 A
- JP 03051846 B
- DE 4229132
- DE 4314690
- DE 4326647
- US 5066572 A


### In der Beschreibung aufgeführte Nicht-Patentliteratur


- **R. W. KENYON.** Chemistry and Technology of Printing and Imaging Systems. Herausgeber Peter Gregory, Blackie Academic & Professional, Chapman & Hall, 1996, 113-138
- *Polymer News,* 1990, vol. 15, 301-306
- **T.H. JAMES.** The Theory of the Photographic Process. Macmillan Publishing Co., Inc, 291 ff
- **CHEN et al.** *J. Polym. Sci.,* 2000, vol. 38, 1811-1817
- **MIYAMOTO et al.** *Macromolecules,* 1989, vol. 22 (4), 1604-1607
- **KOBAYASHI et al.** *Polymer Bulletin,* 1985, vol. 13, 447-451
- **WALLHÄUßER.** Praxis der Sterilisation, Desinfektion, Konservierung. Thieme Verlag, 1985